# EUROPÄISCHE PATENTSCHRIFT

(11) **EP 0 842 301 B1**
(45) Veröffentlichungstag und Bekanntmachung des Hinweises auf die Patenterteilung: **14.11.2001**
(21) Anmeldenummer: 97926900.8
(22) Anmeldetag: 03.06.1997
(51) Int. Cl.: C21B 3/04, C21B 11/00, C04B 5/06

(54) **VERFAHREN ZUM HERSTELLEN VON PUZZOLANEN, SYNTHETISCHEN HOCHOFENSCHLACKEN, BELIT- ODER ALITKLINKERN, SOWIE VON ROHEISENLEGIERUNGEN AUS OXIDISCHEN SCHLACKEN SOWIE VORRICHTUNG ZUR DURCHFÜHRUNG DIESES VERFAHRENS**
METHOD FOR MAKING POZZOLANS, SYNTHETIC BLAST-FURNACE SLAG, BELITE OR ALITE CLINKERS, AND PIG-IRON ALLOYS, FROM OXIDIC SLAG, AND A DEVICE FOR IMPLEMENTIG THIS METHOD
PROCEDE DE PRODUCTION DE POZZOLANES, DE LAITIERS SYNTHETIQUES DE HAUT FOURNEAU, DE CLINKERS DE BELITE OU D'ALITE, ET D'ALLIAGES DE FONTE BRUTE, A PARTIR DE LAITIERS OXYDIQUES, ET DISPOSITIF POUR LA MISE EN OEUVRE DE CE PROCEDE

(30) Priorität: 05.06.1996 AT 97996; 19.06.1996 DE 19624428
(43) Veröffentlichungstag der Anmeldung: 20.05.1998
(73) Patentinhaber: Holcim Ltd., 8645 Jona (CH)
(72) Erfinder: EDLINGER, Alfred, CH-5400 Baden (CH)
(74) Vertreter: Haffner, Thomas M., Dr.
(86) Internationale Anmeldenummer: AT9700113
(87) Internationale Veröffentlichungsnummer: WO9746717

(56) Entgegenhaltungen:
- EP-A- 0 364 825
- EP-A- 0 707 083
- EP-A- 0 801 136
- WO-A-94/17214
- WO-A-95/07365
- WO-A-96/24696
- DE-A- 3 822 705

## Beschreibung

Die Erfindung bezieht sich auf ein Verfahren zum Herstellen von Puzzolanen, synthetischen Hochofenschlacken, Belit- oder Alitklinkern, sowie von Roheisenlegierungen aus oxidischen Schlacken, bei welchem die oxidierten flüssigen Schlacken über einem Eisenbad reduziert werden sowie auf eine Vorrichtung zur Durchführung dieses Verfahrens.

Die deutsche Auslegeschrift 26 48 290 beschreibt ein Verfahren zur Behandlung von eisenhaltigen, metallurgischen Schlacken, das im wesentlichen darin besteht, Hochofenschlacke mit Stahlwerksschlacke zu mischen, um ein Endprodukt mit einer günstigen Zusammensetzung zu erhalten. Besonders vorteilhaft ist es dabei, den Mischprozeß durch eine als Rührer ausgebildete Sauerstoffzuführungslanze mit dem Ziel auszuführen, die Eisengranalien zu oxidieren und eine homogene Mischung zu erzeugen. Die hergestellte synthetische Schlacke weist dann bessere physikalische Eigenschaften als die Hochofenschlacke auf und läßt sich hervorragend granulieren. Die Reste an freiem Kalk entsprechen ungefähr denen der Hochofenschlacke.

In dem deutschen Patent 26 11 889 ist ein Verfahren zum Herstellen von hydraulischem Bindemittel aus Hüttenabfällen und Kalk genannt. In einem integrierten Stahlwerk entstehen auf dem Erzeugungsweg vom Erz zum Stahl etwa 400 kg Hüttenabfälle je Tonne Rohstahl, und davon sind etwa 48 % Hochofenschlacke und 35 % Stahlwerksschlacke. Den Rest bilden Hüttenschutt, Schlämme und Stäube. Der erfindungsgemäße Gedanke besteht darin, zur Herstellung eines Zementklinkers diese Hüttenabfälle zusammen mit Kalk im richtigen Gewichtsverhältnis flüssig zu mischen und die fertige Schmelze zu einem Granulat abzuschrecken. Für das Mischen und Schmelzen unter Zufuhr von Brennstoff und Sauerstoff sind grundsätzlich alle im Stahlwerk bekannten Konverter geeignet. Als besonders vorteilhaft wird jedoch der bodenblasende OBM-Konverter genannt, da sich seine Bodendüsen zum Einleiten von Brennstoff und Feinkalk eignen. Der Einschmelzvorgang erfolgt oxidierend, und in der fertigen Schmelze liegen die Oxide gelöst vor.

Aus der südafrikanischen Patentschrift 94/0521 ist ein Prozeß für die Produktion von Zement aus metallurgischen Schlacken bekannt. Nach diesem Verfahren werden die sauren Hochofenschlacken den basischen Stahlwerksschlacken flüssig bei hohen Temperaturen über 1700°C zugemischt. Das Mischungsverhältnis kann dabei zwischen 30 % bis 80 % der Hochofenschlacke und zwischen 20 % bis 70 % der Konverterschlacke liegen, um einen vorteilhaften Zementklinker herzustellen. Die Mischschlackenschmelze wird erfindungsgemäß in einem ersten Schritt bis zu einer Temperatur von 1000°C langsam abgekühlt und dann in einem zweiten Schritt schneller, und das erstarrte Endprodukt wird anschließend aufgemahlen.

Die südafrikanische Patentschrift 94/05222 zeigt und beschreibt einen Prozeß zur Produktion von Roheisen und Zementklinker. Dabei ist ein Einschmelzvergaser mit einem Wirbelbett aus Kohle vorgesehen, in welchem man durch Zufuhr von Sauerstoff die nötige Energie erzeugt, wobei sich darunter ein Eisenbad mit Schlackenschicht befindet. In einen Vorheizschacht werden zunächst Kalkstein und Eisenerz chargiert. In diesem werden sie getrocknet und kalziniert und schließlich weitgehend zu Kalziumferrit zusammengesintert, bevor sie in den Einschmelzvergaser gelangen. Die Wärme für diesen Vorheizschacht erzeugt man durch Verbrennen des Abgases aus dem Einschmelzvergaser mit vorgeheizter Luft. Die sich im Einschmelzvergaser sammelnde Eisenschmelze aus dem reduzierten Eisenerz und die flüssige Schlacke in Zementklinkerzusammensetzung werden flüssig aus dem Einschmelzvergaser entfernt. Es liegt im Sinne dieser Erfindung, giftige Abfallstoffe, die beispielsweise Dioxin, Furan, PCB und Chloride enthalten, in den Einschmelzvergaser einzuleiten. Ebenfalls kann flüssige Stahlwerkskonverterschlacke in einem für die Zementklinkerherstellung erträglichen Maß zugesetzt werden.

Ein weiteres Verfahren zum Herstellen von Stahl und hydraulisch aktiven Bindemitteln, nämlich Zement, beschreibt die österreichische Patentschrift 400 037. Der Erfindungsgedanke besteht darin, Roheisen durch Zusatz von Stahlschlacke zu frischen und den hohen Eisenoxidgehalt der Stahlschlacke zu nutzen, um damit Kohlenstoff und Silizium aus dem Roheisen zu entfernen. Beispielsweise hat man die Stahlschlacke mit 0,5 Gewichtsanteilen flüssigen Roheisens zusammengebracht und diese Mischung sechs Stunden bei 1660°C gehalten, und dabei konnte der FeO- + MnO-Gehalt der Stahlschlacke von 30,5 % auf 10,5 % erniedrigt werden. Die erhaltene Endschlacke läßt sich als Zementklinker verwenden.

Bei der Aufarbeitung von oxidischen Schlacken stellen insbesondere chromoxidhaltige Schlacken für die Herstellung von Zementzumahlstoffen Probleme dar, da der Chromgehalt dieser Schlacken wesentlich unter 500 ppm liegen müßte. Im Zusammenhang mit den schlackenmetallurgisch erforderlichen Parametern für die Aufarbeitung von oxidischen Schlacken wurde bisher erkannt, daß dem Eisenoxidgehalt eines zur Reduktion verwendeten Eisenbades Bedeutung zukommen kann. Die Reduktion über einem Eisenbad führt bei unterschiedlichen Einsatzmaterialien zu nicht exakt steuerbaren Endprodukten, und insbesondere kann mit einem Eisenbad bei Einsatz von chromoxidhaltigen Schlacken die erforderliche Entchromung nicht ohne weiteres gewährleistet werden. Es ist bekannt, in das Eisenbad Kohlenstoff einzublasen, wobei sich hier allerdings herausgestellt hat, daß ein zu hoher Kohlenstoffgehalt zu lokalen Überhitzungen und zu negativen Reaktionen im Zuge der Reduktion führt. Eine exakte Verfahrensführung ist aufgrund der bisher bei der Reduktion oxidischer Schlacken beachteten Parameter nicht ohne weiteres gewährleistet.

Die Erfindung zielt nun darauf ab, mit konventionellen Reaktoren, wie beispielsweise bodenblasenden Konvertern ohne Einsatz nicht erprobter Blastechnologien und Düsentechnologien eine einfache und wirtschaftliche Verfahrensweise anzugeben, mit welcher die für eine wirkungsvolle Entchromung erforderlichen Werte exakt eingehalten werden können, wobei vor allem darauf abgezielt wird, das Verfahren rasch und in einfacher Weise regelbar durchzuführen. Die Wirtschaftlichkeit soll insbesondere dadurch erhöht werden, daß regionale Überhitzungen ebenso wie übermäßige Schaumbildung hier vermieden wird. Weiters soll das Einblasen von Kohlenstoff und Sauerstoff in einer Weise gewährleistet werden, daß mit konventioneller Düsen- und Blastechnologie unter gleichzeitiger Reduktion der jeweiligen Mengen ein Frischen des Roheisens während des Kohleeinblasens vermieden wird, wodurch das Durchblasen von Kohle und der Austrag von Eisen ebenso wie ein Überschäumen während der Durchführung des Verfahrens verhindert werden kann.

Zur Lösung dieser Aufgabe besteht das erfindungsgemäße Verfahren im wesentlichen darin, daß in das Eisenbad Kohlenstoff über Baddüsen zum Aufrechterhalten eines C-Gehaltes von zwischen 2,5 und 4,6 Gew.% eingeblasen wird. Dadurch, daß der Kohlenstoffgehalt im Rahmen enger Grenzen zwischen 2,5 und 4,6 Gew.% gehalten wird, wird zum einen eine Übersättigung und damit ein Aufschwemmen von Kohlenstoff mit der Gefahr des nachfolgenden Verbrennens an der Grenzschicht verhindert. Weiters wird durch die Einhaltung des Kohlenstoffgehaltes innerhalb der angegebenen Grenzen eine überraschend rasche Entchromung beobachtet. Während bisher für Entchromungsreaktionen mit Zeiträumen von 15 bis 30 Minuten gerechnet wurde, hat es sich überraschenderweise gezeigt, daß unter Einhaltung der konkreten Grenzwerte für den Kohlenstoffgehalt die Entchromung innerhalb weniger Minuten vollständig durchgeführt werden kann. In vorteilhafter Weise wird das Verfahren dabei so durchgeführt, daß der C-Gehalt zwischen 2,5 und 3,5 Gew.% eingestellt wird.

Mit besonderem Vorteil wird die Eisenbadhöhe zwischen 300 und 1200 mm eingestellt, wobei bei Überschreiten einer Eisenbadhöhe von 1200 mm Roheisen abgestochen wird und die eingeblasene Kohlenstoffmenge in Abhängigkeit von einer Meßsonde geregelt wird. Dadurch, daß nun die Eisenbadhöhe zwischen 300 und 1200 mm eingestellt wird, kann mit konventionellen Düsen unter Normaldruck gearbeitet werden, ohne daß die Gefahr eines Durchblasens besteht. Aufgrund der Verwendung konventioneller Düsentechnologien können erprobte Drucksteuerungen eingesetzt werden, mit welchen sichergestellt wird, daß die Sauerstoff- und die Kohlenstoffmenge derart gesteuert werden können, daß tatsächlich die gewünschten Kohlenstoffwerte im Eisenbad mit Sicherheit eingehalten werden.

Die erfindungsgemäße Verfahrensführung erlaubt nun in besonders einfacher Weise eine einfache Regelung und damit eine bessere Reproduzierbarkeit der jeweils angesteuerten Endprodukte. Die insbesondere für eine möglichst rasche, vollständige Entchromung vorgesehenen zwingenden Maßnahmen können in einfacher Weise dadurch aufrecht erhalten werden, daß als Meßsonde ein Echolot oder ein Schallpegelmonitor verwendet wird und daß bei Auftreten von Schaum zusätzlicher Kohlenstoff und/oder CaO in das Eisenbad eingeblasen wird. Überraschenderweise hat sich gezeigt, daß einfache Sonden, wie beispielsweise ein Echolot oder ein Schallpegelmonitor ausreichen, um die gewünschte Regelung und damit die Erzielung reproduzierbarer Ergebnisse zu gewährleisten.

Um die Gefahr lokaler Überhitzung zu vermeiden und das jeweils gewünschte Reduktionspotential auch im unmittelbaren Kontakt mit der flüssigen Schlacke zu gewährleisten, wird mit Vorteil so vorgegangen, daß in das Eisenbad Luft oder Sauerstoff eingeblasen wird und daß auf die aufschwimmende flüssige Schlacke erhitzte Luft (700 bis 1200° C) in einer die in das Bad eingeblasene Menge um einen Faktor 2 bis 3 übersteigenden Menge aufgeblasen wird. Auf diese Weise wird im Zuge einer 60 bis 80 %igen Nachverbrennung mit einem Wärme-Übertragungs-Wirkungsgrad von 75 bis 95 % ein Aufschmelzen teilweise bereits fester Schlacken sowie eine Überhitzung der Schlacken sichergestellt, welche die Reduktion des Chromoxidgehaltes von Schlacken wesentlich verbessert. Entsprechend dünnflüssige Schlacke kann rasch mit dem Kohlenstoffgehalt des Eisenbades umgesetzt werden, wodurch der Chromoxidgehalt der Schlacke innerhalb weniger Minuten auf Werte von weit unter 300 ppm oder sogar unter 100 ppm gesenkt werden kann.

Unter Einhaltung der obigen Bedingungen und insbesondere der Bedingung für die Höhe des Eisenbades gelingt es, die Mengenregulierung für den Sauerstoffeintrag und die Kohlenstoffeinblasrate in einem Ausmaß zu minimieren, daß negative Randeffekte vollständig verhindert werden können. Bei zu hohen Kohlenstoffgehalten erfolgt keine Lösung des Kohlenstoffs im Eisenbad. Kohlenstoff flotiert dann auf dem Bad und verbrennt weitestgehend wirkungslos (sogenannte "Durchbläser"). Bei zu geringem C-Gehalt wird das Eisenbad bei den Arbeitstemperaturen von 1500° bis 1550° C relativ zäh, sodaß aus kinetischen Gründen nur noch wenig Kohlenstoff vom Bad aufgenommen wird. Eine Aufkohlung mit geringen Durchblasverlusten gelingt hier nur nach kurzfristiger Temperaturerhöhung auf etwa 1600° bis 1650° C. Durch die erfindungsgemäße Verfahrensführung kann mit einem Sauerstoffeintrag von unter 150 m³/min und eine Kohleneinblasrate von unter 200 kg/min gearbeitet werden, wodurch selbst bei längerer Reaktionszeit im Konverter wesentlich geringere Kohlenmengen verbraucht werden. Bei Versuchen wurde weiters klargestellt, daß bei einem Kohlenstoffgehalt von unter 2,5 Gew.% im Eisen der Chromoxidgehalt der Schlacke wesentlich höher bleibt und nicht mehr reproduzierbar auf die gewünschten niedrigen Werte abgesenkt werden kann.

In besonders vorteilhafter Weise kann die Regelung des Verfahrens so erfolgen, daß der Druck in den Blasleitungen zu den in das Eisenbad mündenden Düsen in Abhängigkeit von der Höhe des Bades geregelt wird und bei zunehmender Höhe des Bades erhöht wird. Auf diese Weise wird gleichzeitig sichergestellt, daß eine gute Durchmischung des Kohlenstoffes im Bad gewährleistet ist, ohne daß hierbei ein lokales Überfrischen oder eine lokale Überhitzung auftritt. Dies ist auch für die Nachverbrennung wichtig (ca. 20-fache Bad-Oberflächenvergrößerung im Verhältnis zur "ruhigen" Schmelzoberfläche gegenüber dem Konverter-Gasraum).

Mit besonderem Vorteil wird das Verfahren dabei so durchgeführt, daß inerte oder oxidierende Gase mit oder ohne Feststoffbeladung mit einer Gesamteinblasrate von 2,5 Nm³/min.t Eisenschmelze bis 25 Nm³/min.t Eisenschmelze, vorzugsweise 5 Nm³/min.t Eisenschmelze bis 15 Nm³/min.t Eisenschmelze unterhalb der Eisenbadoberfläche eingeblasen werden. Mit diesen Blasraten gelingt es eine ausreichende Badbewegung im Eisenbadreaktor sicherzustellen, womit ein Konzentrationsausgleich und eine Homogenisierung der Eisenschmelze und der Schlackenschicht gewährleistet ist.

Aufgrund der erfindungsgemäßen Regelung ist es nun abweichend von der bisherigen Verfahrensweise möglich, die flüssige Schlacke kontinuierlich zuzuführen und abzuziehen. Dies gelingt insbesondere aufgrund der wesentlich verkürzten Reaktionszeit und der exakter eingehaltenen Verfahrensparameter, wodurch in überaus kurzen Zeiten von wenigen Minuten eine vollständige Umsetzung und insbesondere eine vollständige Entchromung sichergestellt werden kann.

Um unerwünschte lokale Überhitzung mit Sicherheit zu vermeiden, kann mit Vorteil so vorgegangen werden, daß die in der Zeiteinheit eingeblasene Kohlenstoffmenge bei Überschreiten einer Grenztemperatur in der Schlacke oder dem Gasraum reduziert wird und/oder zumindest teilweise durch CaO substituiert wird.

Mit besonderem Vorteil werden dabei Kalk, Dolomit, Bauxit, Schamotte, Flußspat, Kalziumkarbid und/oder andere Schlackenzuschlagsstoffe vorzugsweise unterhalb und/oder oberhalb der Eisenbadoberfläche in die Schmelze eingeblasen. Zur Einstellung des Kohlenstoffgehaltes im Eisenbad und zum Temperaturausgleich im Eisenbadreaktor werden bevorzugt Kohle, Koks, Koksgrus, Braunkohlenkoks, Petrolkoks, Graphit und/oder andere Kohlenstoffträger unterhalb der Badoberfläche, zusammen mit einem Fördergas, in die Eisenschmelze eingeblasen und gleichzeitig der Eisenschmelze Sauerstoff und/oder sauerstoffenthaltende Gase zur mindestens teilweisen Verbrennung des Kohlenstoffs zugeführt.

In einer besonders wirtschaftlichen Weise wird das Verfahren dabei so durchgeführt, daß die aus der Eisenschmelze austretenden Reaktionsgase CO und H₂ im Gasraum des Eisenbadreaktors durch das Aufblasen von Sauerstoff, Luft, Heißwind mit oder ohne Anreicherung von Sauerstoff, mindestens teilweise nachverbrannt werden und die dabei entstehende Wärme an die Schmelze übertragen wird. Damit gelingt es, den wärmetechnischen Wirkungsgrad des Verfahrens zu verbessern. Dabei können in dem Eisenbadreaktor zur Durchführung des erfindungsgemäßen Verfahrens ortsfest im oberen konischen Konverterbereich eingebaute Düsen zum Einsatz kommen, oder es können Lanzen zur Nachverbrennung durch die Konvertermündung in den Konverter eingeführt werden oder aus einer Position oberhalb der Konvertermündung in den Konverter hineinblasen. Auch die Kombination von Lanzen und Düsen ist möglich.

Durch die Anwendung dieser Nachverbrennungstechnik lassen sich auch flüssige und gasförmige Brennstoffe zur Energiezufuhr bei der Prozeßführung und zur Einstellung des Kohlenstoffgehaltes in der Eisenschmelze anwenden. Die aufzuwendende Crack-Energie für die flüssigen und gasförmigen Kohlenwasserstoffe in der Eisenschmelze übersteigt normalerweise den Energiegewinn aus der Verbrennung des Kohlenstoffanteils zu CO, und somit würden diese Brennstoffe zu einer Abkühlung der Schmelze führen, solange keine Nachverbrennung der Reaktionsgase mit gleichzeitiger Wärmerückübertragung an die Schmelze erfolgt.

Um eine möglichst rasche und vollständige Reduktion der Metalloxide, insbesondere von Chromoxid, aus der Schlacke zu erzielen, kann das Verfahren in einfacher Weise so durchgeführt werden, daß der CO-Partialdruck im Eisenbadreaktor mindestens zeitweise durch Einleiten von Stickstoff, Argon und/oder anderen inerten Gasen durch die Unterbaddüsen und Unterbrechung der Zufuhr sauerstoffhaltiger Gase auf die Badoberfläche erniedrigt wird.

Eine besonders vorteilhafte Anwendung des erfindungsgemäßen Verfahrens stellt die Aufbereitung der in großen Mengen anfallenden oxidischen Schlacken, wie z.B. Müllverbrennungsanlagenschlacken, Hochofenschlacken und Stahlwerksschlacken durch das Mischen und Verflüssigen von zwei oder den drei genannten Schlacken dar. In Abhängigkeit von ihrer genauen Analyse und ggf. der Zugabe von geeigneten Zuschlagstoffen, läßt sich relativ schnell ein für die Zementerzeugung geeignetes Produkt herstellen. Normalerweise chargiert man diese Schlacken kalt in den Eisenbadreaktor. Falls jedoch eine oder mehrere dieser Schlacken flüssig zur Verfügung stehen, ist der Flüssigeinsatz zur Verbesserung der Wirtschaftlichkeit des Prozesses vorzuziehen. Mit besonderem Vorteil kann dabei das Verfahren so durchgeführt werden, daß zusätzlich Stäube und/oder aufgemahlene andere Reststoffe teilweise oder insgesamt unterhalb der Badoberfläche in die Eisenschmelze eingeblasen werden. Die Stäube bzw. Reststoffe können dabei z.B. aus Müllverbrennungsanlagen oder metallurgischen und thermischen Prozessen stammen und gefährliche Abfälle, Stäube, Schlämme, Shredderrückstände und kontaminierte chemische Produkte beinhalten. In einer besonders vorteilhaften Weise werden dabei ein oder mehrere Reststoffe in flüssiger und/oder fester Form oberhalb der Eisenbadoberfläche in den Eisenbadreaktor chargiert. Alternativ kann dabei auch so vorgegangen werden, daß zwei oder mehrere Reststoffe vorgemischt in flüssiger Form oder als Feststoff in den Eisenbadreaktor chargiert werden.

Das erfindungsgemäße Verfahren kann in einfachen, konventionellen Konvertern, insbesondere bodenblasenden Konvertern, abgeführt werden, wobei die technische Adaptierung für die Optimierung der Verfahrensführung lediglich geringen baulichen Aufwand erfordert. Insbesondere kann aufgrund der besonders einfachen Konstruktion derartiger Konverter die Betriebssicherheit wesentlich erhöht werden. Mit Vorteil ist die erfindungsgemäße Vorrichtung zur Durchführung des erfindungsgemäßen Verfahrens mit einem bodenblasenden Konverter dadurch gekennzeichnet, daß der Konverter in einem der gewünschten Eisenbadhöhe entsprechenden Bereich auf geringere Querschnittsfläche bzw. verjüngt ausgebildet ist und über wenigstens eine Sonde zur Erfassung der Schaumbildung, zur Ermittlung der C-Konzentration im Eisenbad und/oder der Temperatur der Schlacke und/oder des Gasraumes verfügt, deren Signale einer Regelschaltung für die Kohlenstoffdosierung und/oder dem Eisenbadabstich zugeführt sind. Auf diese Weise kann mit geringen Eisenbadmengen die gewünschte Eisenbadhöhe erzielt werden, sodaß das erforderliche Kohlenstoffeinbringen insgesamt weiter verringert werden kann.

Die Erfindung wird nachfolgend anhand der Zeichnung und von Ausführungsbeispielen näher erläutert. In der Zeichnung zeigt Fig.1 den Zusammenhang zwischen C-Gehalt des Bades und Cr₂O₃-Reduktion der Schlacke. In Fig. 2 und Fig. 3 sind Vorrichtungen zur Durchführung des erfindungsgemäßen Verfahrens schematisch dargestellt.

### Ausführungsbeispiel:

30 t flüssiges Roheisen und 20 t flüssige Schlacke, die in einer Pfanne vermischt wurden, wurden zunächst entsiliziert, wofür Kalk eingeblasen wurde. In der Folge wurde Kohle in das Eisenbad eingeblasen. Die Schlacke wurde in zwei gleichen Teilen aufgegeben, wobei der zweite Schlackenteil nach Einblasen von 50 % der für die gesamte Schmelze berechneten Kohlenmenge zugegeben wurde und die restliche Kohlenmenge eingeblasen wurde. Der Chromoxidgehalt wurde in einer Zeit von unter 5 Minuten von ursprünglich 1200 ppm auf 100 ppm reduziert, wobei der Kohlenstoffgehalt des Eisenbad bei minimal 2,65 Gew.% lag. Bei einer Mehrzahl von Versuchen wurde festgestellt, daß die Abnahme des Chromoxidgehaltes in der Schlacke auf vertretbare Werte mit Kohlenstoffgehalten von unter 2 Gew.% nicht gewährleistet werden konnte.

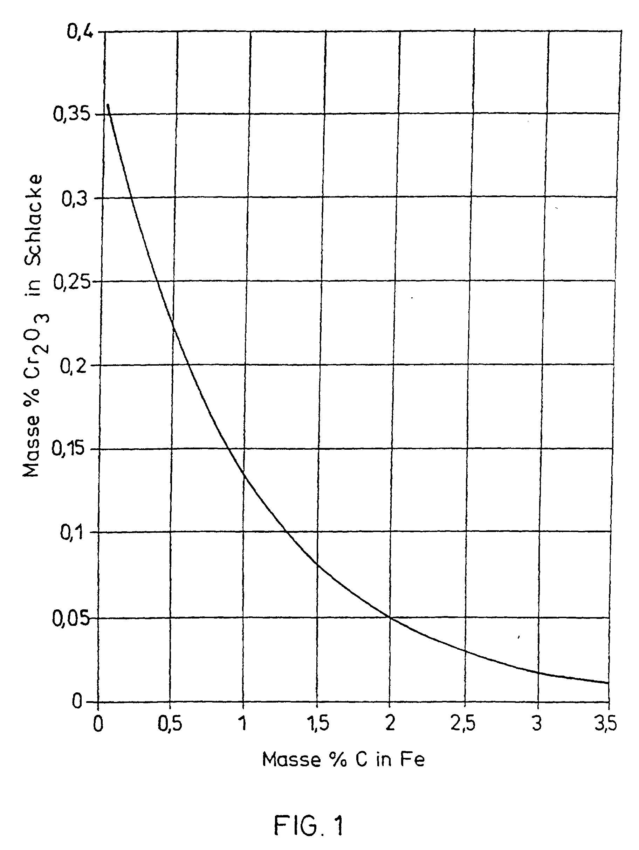

Wie in Fig.1 ersichtlich, konnte bei Kohlenstoffgehalten von 2 Gew.% in der Schlacke der Chromdioxidgehalt in der Schlacke nur auf maximal 500 ppm gesenkt werden, was für nachfolgende Verwendungen in der Zementindustrie nicht akzeptabel erscheint. Bei Werten über 2,5 Gew.% Kohlenstoff im Eisenbad konnten aber reproduzierbar bereits Werte weit unter 500 ppm sichergestellt werden, wobei sich diese Werte mit zunehmendem Kohlenstoffgehalt bis etwa 3,5 Gew.% kontinuierlich verbessern. Die weitere Abnahme des Chromoxidgehaltes der Schlacke bei Kohlenstoffgehalten von 3,5 bis 4,6 Gew.% blieben im wesentlichen linear, wobei bei Überschreiten der Obergrenze von 4,6 Gew.% die eingangs geschilderten Nebeneffekte eine wirtschaftliche Verfahrensführung nicht mehr gewährleisten.

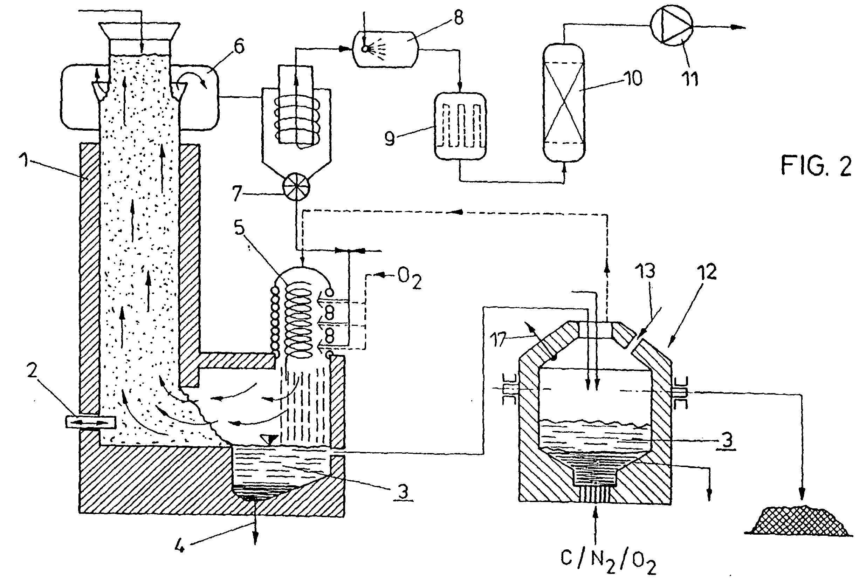

In Fig.2 ist eine erste Anlage zur Durchführung des erfindungsgemäßen Verfahrens näher erläutert. Mit 1 ist hier ein Einschmelzoxidationsreaktor bezeichnet, in welchen feste Schlacken eingebracht werden. Die Schlacken können unterschiedlichen Ursprungs sein, wobei unter anderem Müllverbrennungsschlacken oder metallurgische Schlacken sowie Gemische verschiedener Schlacken zum Einsatz gelangen können. Die weitestgehend verflüssigte, zähflüssige Schlacke kann über einen Stössel 2 in einen ersten Oxidationsraum eingebracht werden, in welchem aus der flüssigen Schlacke 3 Kupfer durch thermische Dissoziation sedimentiert werden kann und über einen Bodenauslaß 4 abgezogen werden kann. In diesen Teilbereich des Einschmelzoxidationsreaktors, in welchem bereits eine flüssige Schlacke vorliegt, können beispielsweise unter Verwendung eines Zyklons 5 auch andere zu entsorgende Produkte, wie beispielsweise Shredderleichtfraktionen sowie Filterstäube aus der Müllverbrennung oder Hochofenstäube eingeblasen und aufgeschmolzen werden, wobei derartige Stäube beispielsweise auch aus dem Kopfbereich 6 des Einschmelzoxidationsreaktors abgezogen und über eine Zellradschleuse 7 wiederum dem Zyklon zum Aufschmelzen aufgegeben werden können. Die aus dem Kopf 6 des Einschmelzoxidationsreaktors abgezogene, staubbeladene Gasmenge kann nach einer Reinigung in einem Heißgaszyklon über eine Kühlung mit Quenchwasser, wie sie mit 8 bezeichnet ist, weiter gereinigt werden, wobei die Restwärme rekuperativ beispielsweise in einem Wärmetauscher 9 rückgewonnen werden kann. Nach abschließender Reinigung in einem Gegenstromaktivkoksfilter 10 kann Reingas über ein Gebläse 11 ausgetragen werden.

Die flüssige Schlacke 3 gelangt in einen bosenblasenden Konverter 12, welchem über Bodendüsen Kohlenstoff, Stickstoff und Sauerstoff eingetragen werden. Der Konverter ist so ausgebildet, daß er in seinem den Düsen benachbarten Bereich verjüngt ausgestaltet ist, sodaß das flüssige Roheisenbad bei geringer Roheisenmenge die jeweilig gewünschte Badhöhe zwischen 300 und 1200 mm erreichen kann. Auf dem Roheisenbad schwimmt die flüssige Schlacke 3 auf, wobei der Schlacke aus dem Einschmelzoxidationsreaktor an dieser Stelle auch LD-Schlacke zugeführt werden kann. Ein Aufschmelzen bzw. eine Aufrechterhaltung der erforderlichen Schlackentemperatur zur Erzielung einer dünnflüssigen Schlacke kann durch Aufblasen von Sauerstoff in Richtung des Pfeiles 13 gewährleistet werden, wobei der bodenblasende Konverter 12 hier als kippbarer Konverter ausgebildet ist und in regelmäßigen Abständen entleert werden kann. Aus dem Gasraum des Konverters 12 kann Zink und Blei in der Gasphase gemeinsam mit CO₂ bzw. CO abgezogen werden, wobei nach Kondensieren von Zink und Blei das Gasgemisch dem Heißzyklon 5 aufgegeben werden kann.

Die jeweils abgezogene, von Chrom weitestgehend befreite Schlackenmenge kann granuliert werden und in granulierter Form entsprechend weiterverwendet werden. Das gewonnene Roheisen kann unmittelbar im Stahlwerk weiterverarbeitet werden.

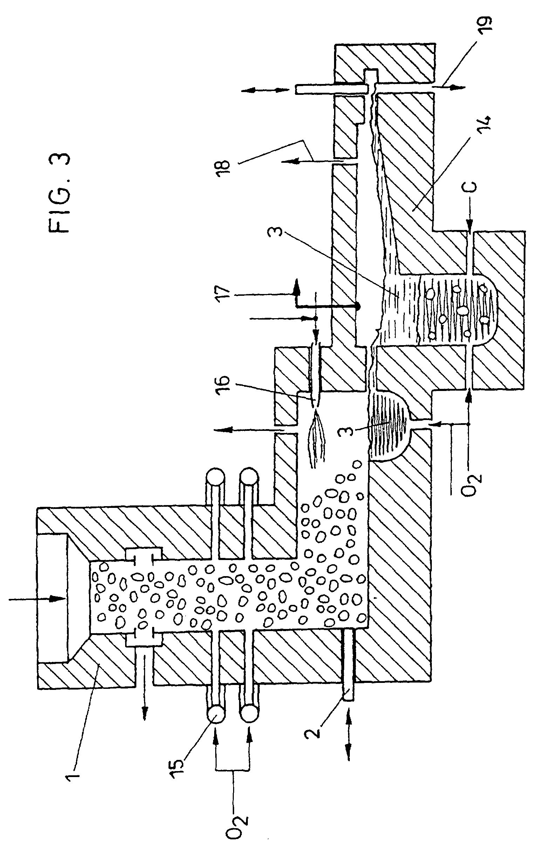

Bei der Ausbildung nach Fig.3 wird die Schlacke dem Eisenbadreaktor 14 kontinuierlich aufgegeben. Es ist wiederum ein Einschmelzoxidationsreaktor 1 vorgesehen, in welchem eine Schlackenvorwärmung bzw. Eisenverbrennung erfolgt. In den Einschmelzoxidationsreaktor wird Sauerstoff über Ringdüsen 15 eingeblasen, um die gewünschte Schmelztemperatur zu erzielen. Das weitestgehend angeschmolzene Material wird über den Stössel 2 in den Raum befördert, in welchem sich die flüssige Schlacke 3 sammelt. Die erforderlichen Temperaturen können hier mit einer Brennlanze 16 aufrecht erhalten werden, wobei die Schlacke kontinuierlich in den nachfolgenden Eisenbadreaktor 14 übergeführt wird. Die Zuführung von Sauerstoff und Kohlenstoff erfolgt bei dieser Ausgestaltung im unteren Bereich des Eisenbades, wobei die Höhe des Eisenbades über den Sauerstoff- bzw. Kohlenstoffeinblasdüsen in der gewünschten Weise zwischen 300 und 1200 mm geregelt wird. Ebenso wie bei der Darstellung in Fig.2 ist im Eisenbadreaktor ein Echolot 17 angeordnet, mit welchem die Schaumbildung überwacht wird, um die entsprechende Einblasmenge bzw. den Einblasdruck zu regeln. Die Roheisenbadhöhe kann mit konventionellen Methoden abgetastet werden und in die gewünschte Regelung eingehen.

Aus dem Eisenbadreaktor 14 bei der Darstellung nach Fig.3 kann wiederum Zink, Blei und Kohlenmonoxid über einen Abzug 18 ausgebracht werden, wobei die im Durchlauf behandelte Schlackenmenge über einen Abstich 19 einem Granulator zur Herstellung von puzzolanischen Granulaten zugeführt wird.

Die in Fig.2 und Fig.3 schematisch erläuterten Vorrichtungen eignen sich für die Aufgabe unterschiedlicher Verbrennungsrückstände bzw. Schlacken, und es können neben Müllverbrennungsschlacken auch unmittelbar Pyrolisate eingebracht werden, wodurch teilweise fossile Energie zum Aufheizen bzw. Einschmelzen der Schlacke eingespart werden kann.

Aufgrund der vorgeschlagenen Regelung über die Badhöhe und/oder die Erfassung von unzulässigen Betriebszuständen, wie beispielsweise übermäßige Schaumbildung, kann die Verfahrensweise weitestgehend optimiert und automatisiert werden, wobei insbesondere, wie aus der in Fig.3 erläuterten Anlage ersichtlich, auch eine kontinuierliche Fahrweise und damit eine besonders gute Wirtschaftlichkeit gewährleistet werden kann.

## Patentansprüche

1. Verfahren zum Herstellen von Puzzolanen, synthetischen Hochofenschlacken, Belit- oder Alitklinkern, sowie von Roheisenlegierungen aus oxidischen Schlacken, bei welchem die oxidierten flüssigen Schlacken über einem Eisenbad reduziert werden, **dadurch gekennzeichnet, daß** in das Eisenbad Kohlenstoff über Baddüsen zum Aufrechterhalten eines C-Gehaltes von zwischen 2,5 und 4,6 Gew.% eingeblasen wird

2. Verfahren nach Anspruch 1, **dadurch gekennzeichnet, daß** die Eisenbadhöhe zwischen 300 und 1200 mm eingestellt wird, wobei bei Überschreiten einer Eisenbadhöhe von 1200 mm Roheisen abgestochen wird und die eingeblasene Kohlenstoffmenge in Abhängigkeit von einer Meßsonde geregelt wird.

3. Verfahren nach Anspruch 1 oder 2, **dadurch gekennzeichnet, daß** der C-Gehalt zwischen 2,5 und 3,5 Gew.% eingestellt wird.

4. Verfahren nach Anspruch 1, **dadurch gekennzeichnet, daß** als Meßsonde ein Echolot oder ein Schallpegelmonitor verwendet wird und daß bei Auftreten von Schaum zusätzlicher Kohlenstoff und/ oder CaO in das Eisenbad eingeblasen wird.

5. Verfahren nach Anspruch 1 oder 2, **dadurch gekennzeichnet, daß** in das Eisenbad Luft oder Sauerstoff eingeblasen wird und daß auf die aufschwimmende flüssige Schlacke Luft oder Sauerstoff in einer die in das Bad eingeblasene Menge um einen Faktor 2 bis 3 übersteigenden Menge aufgeblasen wird.

6. Verfahren nach einem der Ansprüche 1 bis 5, **dadurch gekennzeichnet, daß** der Druck in den Blasleitungen zu den in das Eisenbad mündenden Düsen in Abhängigkeit von der Höhe des Bades geregelt wird und bei zunehmender Höhe des Bades erhöht wird.

7. Verfahren nach einem der Ansprüche 1 bis 6, **dadurch gekennzeichnet, daß** inerte oder oxidierende Gase mit oder ohne Feststoffbeladung mit einer Gesamteinblasrate von 2,5 Nm³/min.t Eisenschmelze bis 25 Nm³/min.t Eisenschmelze, vorzugsweise 5 Nm³/min.t Eisenschmelze bis 15 Nm³/min.t Eisenschmelze unterhalb der Eisenbadoberfläche eingeblasen werden.

8. Verfahren nach einem der Ansprüche 1 bis 7, **dadurch gekennzeichnet, daß** die flüssige Schlacke kontinuierlich zugeführt und abgezogen wird.

9. Verfahren nach einem der Ansprüche 1 bis 8, **dadurch gekennzeichnet, daß** die in der Zeiteinheit eingeblasene Kohlenstoffmenge bei Überschreiten einer Grenztemperatur in der Schlacke oder dem Gasraum reduziert wird und/oder zumindest teilweise durch CaO substituiert wird.

10. Verfahren nach einem der Ansprüche 1 bis 9, **dadurch gekennzeichnet, daß** Kohle, Koks, Koksgruß, Braunkohlenkoks, Petrolkoks, Graphit und/oder andere Kohlenstoffträger unterhalb der Badoberfläche, zusammen mit einem Fördergas, in die Eisenschmelze eingeblasen und gleichzeitig der Eisenschmelze Sauerstoff und/oder sauerstoffenthaltende Gase zur mindestens teilweisen Verbrennung des Kohlenstoffs zugeführt werden.

11. Verfahren nach einem der Ansprüche 1 bis 10, **dadurch gekennzeichnet, daß** die aus der Eisenschmelze austretenden Reaktionsgase CO und H₂ im Gasraum des Eisenbadreaktors durch das Aufblasen von Sauerstoff, Luft, Heißwind mit oder ohne Anreicherung von Sauerstoff, mindestens teilweise nachverbrannt werden und die dabei entstehende Wärme an die Schmelze übertragen wird.

12. Verfahren nach einem der Ansprüche 1 bis 11, **dadurch gekennzeichnet, daß** der CO-Partialdruck im Eisenbadreaktor mindestens zeitweise durch Einleiten von Stickstoff, Argon und/oder anderen inerten Gasen durch die Unterbaddüsen und Unterbrechung der Zufuhr sauerstoffhaltiger Gase auf die Badoberfläche erniedrigt wird.

13. Verfahren nach einem der Ansprüche 1 bis 12, **dadurch gekennzeichnet, daß** Kalk, Dolomit, Bauxit, Schamotte, Flußspat, Kalziumkarbid und/oder andere Schlackenzuschlagsstoffe vorzugsweise unterhalb und/oder oberhalb der Eisenbadoberfläche in die Schmelze eingeblasen werden.

14. Verfahren nach einem der Ansprüche 1 bis 13, **dadurch gekennzeichnet, daß** zusätzlich Stäube und/oder aufgemahlene andere Reststoffe teilweise oder insgesamt unterhalb der Badoberfläche in die Eisenschmelze eingeblasen werden.

15. Verfahren nach einem der Ansprüche 1 bis 14, **dadurch gekennzeichnet, daß** ein oder mehrere Reststoffe in flüssiger und/oder fester Form oberhalb der Eisenbadoberfläche in den Eisenbadreaktor chargiert werden.

16. Verfahren nach einem der Ansprüche 1 bis 14, **dadurch gekennzeichnet, daß** zwei oder mehrere Reststoffe vorgemischt in flüssiger Form oder als Feststoff in den Eisenbadreaktor chargiert werden.

17. Vorrichtung zur Durchführung des Verfahrens nach einem der Ansprüche 1 bis 16 mit einem bodenblasenden Konverter, **dadurch gekennzeichnet, daß** der Konverter in einem der gewünschten Eisenbadhöhe entsprechenden Bereich auf geringere Querschnittsfläche bzw. verjüngt ausgebildet ist und über wenigstens eine Sonde zur Erfassung der Schaumbildung, zur Ermittlung der C-Konzentration im Eisenbad und/oder der Temperatur der Schlacke und/oder des Gasraumes verfügt, deren Signale einer Regelschaltung für die Kohlenstoffdosierung und/oder dem Eisenbadabstich zugeführt sind.

## Claims

1. Process for producing pozzuolanas, synthetic blast furnace slags, belite or alite clinkers, as well as pig iron alloys made up of oxide slags, where the oxidised molten slags are reduced by means of an iron bath, **characterized in that** carbon is blasted into the iron bath via bath nozzles in order to maintain a C-content of between 2.5 and 4.6 weight %.

2. Process as per claim 1, **characterized in that** the iron bath height is adjusted to between 300 and 1200 mm, whereby upon exceeding an iron bath height of 1200 mm pig iron is run off and the blasted carbon matter is regulated depending on a measurement probe.

3. Process as per claim 1 or 2, **characterized in that** the C-content is adjusted between 2.5 and 3.5 weight %.

4. Process as per claim 1, **characterized in that** for the measurement probe use is made of a sonic depth finder or a sound level monitor and that in the event of scum forming additional carbon and/or CaO are blasted into the iron bath.

5. Process as per claim 1 or 2, **characterized in that** air or oxyogen are blasted into the iron bath and that air or oxygen are blasted on to the floating molten slag in the bath in a quantity exceeding that in the iron bath by a factor of 2 to 3.

6. Process as per claims 1 to 5, **characterized in that** the pressure in the blast pipes leading to the nozzles opening on to the iron bath is regulated depending on the height of the bath and is raised along with increasing height of the bath.

7. Process as per claims 1 to 6, **characterized in that** inert or oxidizing gases with or without a solid charge are blasted in below the iron bath surface at a total blast rate of 2.5 Nm³/min.t. iron smelt, preferably 5 Nm³/min.t iron smelt to 15 Nm³/min.t. iron smelt.

8. Process as per one of the claims I to 7, **characterized in that** the molten slag is continously fed in and drawn off.

9. Process as per one of the claims 1 to 8, **characterized in that** the quantity of carbon blasted in during the time unit upon exceeding a threshold temperature in the slag or the gas cavity is reduced and/or at least partially substitued by CaO.

10. Process as per claims 1 to 9, **characterized in that** coal, coke, coke breeze, lignite coke, petroleum coke, graphite and/or other carbon vehicles are blasted below the bath surface along with a production gas into the iron smelt and simultaneously oxygen and/or oxygen containing gases are fed in for at least partial burning of the carbon.

11. Process as per claims 1 to 10, **characterized in that** the reaction gases CO and H2 issuing from the iron smelt in the gas cavity of the iron bath reactor are at last partially burnt up again through blowing in oxygen, air, hot blast with or without enrichment of oxygen, and the heat arising transferred to the smelt.

12. Process as per claims 1 to 11, **characterized in that** the CO part-pressure in the iron bath reactor is reduced at least at times by the introduction of nitrogen, argon and/or other inert gases via under-bath nozzles and interruption of the supply of oxygen-containing gases on to the bath surface.

13. Process as per claims 1 to 12, **characterized in that** lime, dolomite, bauxite, fire-clay, fluorite, calcium carbide and/or other slag loading substances are blasted in preferably below and/or above the iron bath surface into the smelt.

14. Process as per claims 1 to 13, **characterized in that** additional dusts and/or other mill-ground residue substances are blasted in partially or wholly below the bath surface into the iron smelt.

15. Process as per claims 1 to 14, **characterized in that** one or several residue substances are charged in fluid and/or solid form into the iron bath reactor above the iron bath surface.

16. Process as per claims 1 to 14, **characterized in that** two or several residue substances are previously mixed in fluid form or as a solid and charged into the iron bath reactor.

17. Apparatus for implementing the process as per one of claims 1 to 16 with a floor blasting converter, **characterized in that** the converter is designed in a range corresponding to the required iron bath height at a lower cross sectional surface or is reduced, and has at its disposal at least one probe for finding scum formation, for ascertaining the C-concentration in the iron bath and/or the temperature of the slag and or of the gas cavity, whose signals are transmitted to a regulation control for carbon dosing and/or iron bath tapping.

## Revendications

1. Procédé de production de pouzzolanes, de laitiers synthétiques de haut-fourneau, de clinkers de bélite ou d'alite, et d'alliages de fontc brute, à partir de laitiers oxydants, dans lequel les laitiers liquides oxydés sont réduits via un bain de fonte, **caractérisé en ce qu'**il est insufflé du carbone dans le bain de fonte via des buses de bain pour conserver une teneur en carbone comprise entre 2,5 et 4,6 % en poids.

2. Procédé selon la revendication 1, **caractérisé en ce que** la hauteur du bain de fonte est ajustée entre 300 et 1 200 mm, de la fonte brute étant soutirée en cas de dépassement d'une hauteur du bain de fonte de 1 200 mm, la quantité de carbone insufflée étant réglée en fonction d'une sonde de mesure.

3. Procédé selon la revendication 1 ou 2, **caractérisé en ce que** la teneur en carbone est ajustée entre 2,5 et 3,5 % en poids.

4. Procédé selon la revendication 1, **caractérisé en ce qu'**il est utilisé une écho-sonde ou un phonemètre de contrôle en tant que sonde de mesure, et **en ce qu'**il est insufflé un supplément de carbone et/ou de CaO dans le bain de fonte en cas de formation de mousse.

5. Procédé selon la revendication 1 ou 2, **caractérisé en ce qu'**il est insufflé de l'air ou de l'oxygène dans le bain de fonte, et **en ce que** de l'air ou de l'oxygène est soufflé sur le laitier liquide surnageant, en quantité 2 à 3 fois supérieure à la quantité insufflée dans le bain.

6. Procédé selon l'une des revendications 1 à 5, **caractérisé en ce que** la pression dans les conduites de soufflage est réglée sur celle des buses débouchant dans le bain de fonte en fonction de la hauteur du bain, et **en ce qu'**elle est accrue à mesure qu'augmente la hauteur du bain.

7. Procédé selon l'une des revendications 1 à 6, **caractérisé en ce que** des gaz inertes ou oxydants, avec ou sans charge de solides, sont insufflés sous la surface du bain de fonte à une vitesse d'insufflation globale de 2,5 Nm³/min. par tonne de fonte en fusion à 25 Nm³/min, par tonne de fonte en fusion, de préférence de 5 Nm³/min. par tonne de fonte en fusion à 15 Nm³/min. par tonne de fonte en fusion.

8. Procédé selon l'une des revendications 1 à 7, **caractérisé en ce que** le laitier liquide est amené et soutiré en continu.

9. Procédé selon l'une des revendications 1 à 8, **caractérisé en ce que** la quantité de carbone insufflée par unité de temps, en cas de dépassement d'une température limite dans le laitier ou dans l'enceinte du gaz, est réduite et/ou substituée au moins pour partie par du CaO.

10. Procédé selon l'une des revendications 1 à 9, **caractérisé en ce que** du charbon, du coke, du poussier de coke, du coke de lignite, du coke de pétrole, du graphite et/ou d'autres porteurs de carbone sont insufflés dans la fonte en fusion sous la surface du bain, conjointement avec un gaz transporteur, et **en ce qu'**est simultanément amené à la fonte en fusion de l'oxygène et/ou des gaz à teneur en oxygène pour la combustion au moins partielle du carbone.

11. Procédé selon l'une des revendications 1 à 10, **caractérisé en ce que** les gaz réactionnels formés à partir de la fonte en fusion CO et H₂ dans l'enceinte de gaz du réacteur du bain de fonte subissent une postcombustion au moins partielle du fait que l'on insuffle de l'oxygène, de l'air, du vent chaud enrichi ou non en oxygène, et **en ce que** la chaleur ce faisant dégagée est communiquée à la masse en fusion.

12. Procédé selon l'une des revendications 1 à 11, **caractérisé en ce que** la pression partielle de CO dans le réacteur du bain de fonte est abaissée au moins temporairement par introduction d'azote, d'argon et/ou d'autres gaz inertes via les buses se trouvant sous le bain, et par interruption de l'apport en gaz à teneur en oxygène en surface du bain.

13. Procédé selon l'une des revendications I à 12, **caractérisé en ce que** de la chaux, de la dolomite, de la bauxite, de la chamotte, du spath fluor, du carbure de calcium et/ou d'autres additifs pour laitier sont insufflés dans la matière en fusion, de préférence en-dessous et/ou au-dessus de la surface du bain de fonte.

14. Procédé selon l'une des revendications 1 à 13, **caractérisé en ce que** sont en outre insufflés dans la fonte en fusion, des poussières et/ou d'autres matières résiduelles broyées, partiellement ou intégralement en-dessous de la surface du bain.

15. Procédé selon l'une des revendications 1 à 14, **caractérisé en ce qu'**une ou plusieurs matières résiduelles sous forme liquide et/ou solide sont chargées dans le réacteur du bain de fonte au-dessus de la surface du bain de fonte.

16. Procédé selon l'une des revendications 1 à 14, **caractérisé en ce que** deux matières résiduelles ou plus, prémélangées sous forme d'un liquide ou en tant que solide, sont chargées dans le réacteur du bain de fonte.

17. Dispositif pour la mise en oeuvre du procédé selon l'une des revendications 1 à 16, avec un convertisseur à soufflage par le fond, **caractérisé en ce que** le convertisseur, dans une zone correspondant à la hauteur idéale du bain de fonte, est conçu avec une section transversale plus faible ou est réduit, et **en ce qu'**il dispose d'au moins une sonde pour détecter la formation de mousse, pour déterminer la concentration en carbone dans le bain de fonte et/ou la température du laitier et/ou de l'enceinte de gaz, dont les signaux sont transmis à un circuit de régulation pour le dosage du carbone et/ou à la coulée du bain de fonte.
